# EUROPEAN PATENT SPECIFICATION

(11) **EP 4 200 535 B1**
(45) Date of publication and mention of the grant of the patent: **23.04.2025**
(21) Application number: 21881156.0
(22) Date of filing: 15.10.2021
(51) Int. Cl.: F16D 57/00, F16D 57/06, F16F 15/02, B62D 5/00, F16D 57/02

(54) **DRUM TACTILE FEEDBACK DEVICE STEERING UNIT AND METHOD**
LENKEINHEIT UND -VERFAHREN FÜR EINE TAKTILE TROMMELFEEDBACKVORRICHTUNG
UNITÉ ET PROCÉDÉ DE DIRECTION DE DISPOSITIF DE RÉTROACTION TACTILE DE TAMBOUR

(30) Priority: 15.10.2020 US 202063092046 P
(43) Date of publication of application: 28.06.2023
(73) Proprietor: LORD Corporation, Cleveland OH 44124 (US)
(72) Inventor: JARZOMSKI, Michael, Apex, North Carolina 27502 (US)
(74) Representative: Murgitroyd & Company
(86) International application number: PCT/US2021/055136
(87) International publication number: WO 2022/081946

(56) References cited:
- WO-A1-2008/052799
- CN-A- 108 139 765
- US-A1- 2003 079 948
- US-A1- 2004 084 259
- US-A1- 2005 126 871
- US-A1- 2009 026 033
- US-A1- 2010 283 588
- US-A1- 2014 008 159
- US-A1- 2018 106 311
- US-A1- 2019 286 184

## Description

### Cross-Reference to Related Applications

The present invention claims the benefit of U.S. Provisional Patent Application Ser. No. 63/092,046, filed on October 15, 2020, and entitled "DRUM TACTILE FEEDBACK DEVICE STEERING UNIT AND METHOD,".

### Field of Invention/Background

The subject matter herein generally relates to the field of resistive torque-generating devices and systems (e.g., brakes, locks, clutches, tactile feedback devices, resistance-generating devices, motion control devices, and the like). More particularly, the subject matter herein relates to tactile feedback device (TFD) drum brakes using magnetically responsive (MR) material to generate resistive torque.

### Background

Existing magnetically responsive (MR) devices such as disk rotor brakes and drum brakes have a gap between the rotor and the coil which creates shear surfaces.

Document US 2009/026033 A1, belonging to the state of the art, discloses a tactile feedback device drum brake comprising a shaft having a rotation disk rotatably connected thereto a drum rotor connected to the rotation disk, a core (5) having an integrated coil positioned radially inward from the drum rotor forming a first gap therebetween, a pole ring fixedly positioned radially outward from the drum rotor forming a second gap therebetween and a magnetically responsive material disposed within the first gap and the second gap.

Existing drum brakes do not have and cannot support more than two shear surfaces. Torque is limited to the size of the device and the available shear surface. Additionally, existing MR devices using a MR material require expensive seals to prevent the migration of the MR material from the gap into the remainder of the device. What is needed is an MR drum that is smaller than the existing devices and that provides greater torque. Also, what is needed is an MR drum brake that has improved seals to prevent migration of the MR material.

### Summary of the Invention

In one aspect, a tactile feedback device (TFD) drum brake according to claim 1 is provided. The TFD drum brake comprises a shaft, a drum rotor, a core, a pole ring, a magnetically responsive (MR) material, an upper magnetic seal, a lower magnetic seal, at least one sensor, and a housing enclosing the foregoing. The shaft has a rotation disk rotatably connected thereto. The drum rotor is connected to the rotation disk. The core has an integrated coil positioned radially inward from the drum rotor and forms a first gap therebetween. The pole ring is fixedly positioned radially outward from the drum rotor and forms a second gap therebetween. The MR material is disposed within the first gap and the second gap. The upper magnetic seal is positioned to block MR material from moving from the second gap. The lower magnetic seal is positioned to block MR material from moving from the first gap. The housing encloses the shaft, the drum rotor, the core, the upper magnetic seal, and the lower magnetic seal. The housing has a housing cap and a sensor housing secured thereto. The at least one sensor is capable of detecting rotation of the shaft.

In a preferred embodiment the drum rotor has a first brake shear surface and a second brake shear surface, wherein the first brake shear surface is on a rotor inner surface (RIS) of the drum rotor and the second brake shear surface is on a rotor outer surface (ROS) of the drum rotor. The pole ring has a pole ring shear surface on a pole ring inner surface (PRIS) fixedly and oppositely positioned from the ROS, wherein a second gap is positioned between the PRIS and the ROS. The core has an integrated coil. The core has a core shear surface on a core outer surface (COS) oppositely positioned from the RIS, wherein a first gap is positioned between the COS and the RIS. The rotation disk has an end, wherein the drum rotor is connected to the end and the rotation disk is rotatably connected to a shaft. The MR material is disposed within the first gap and the second gap. The housing includes a housing cap secured to a housing wall at housing top edge of the housing wall. The housing also includes a sensor housing secured to the housing wall at a housing bottom edge of the housing wall. The upper magnetic seal is positioned to block movement of the MR material from the first gap past an upper void between the upper magnetic seal and the housing cap. The lower magnetic seal is positioned to block movement of the MR material from the second gap past a lower void between lower magnetic seal and the core.

In yet another aspect, a method according to claim 15 of providing tactile feedback using TFD drum brake according to claim 1 is provided. The method comprises generating torque with TFD drum brake, energizing an integrated coil by applying current to the integrated coil, magnetically saturating a drum rotor, and generating a resistive torque. The drum brake includes a housing which encloses a shaft, a drum rotor, a pole ring, a core, a rotation disk, an upper magnetic seal, a lower magnetic seal, a MR material, and at least one sensor. The drum rotor has a first brake shear surface and a second brake shear surface. The first brake shear surface is on a rotor inner surface (RIS) of the drum rotor and the second brake shear surface is on a rotor outer surface (ROS) of the drum rotor. The pole ring has a pole ring shear surface on the pole ring inner surface (PRIS) fixedly and oppositely positioned from the ROS. The second gap is positioned between the PRIS and the ROS. The core has the integrated coil and a core shear surface on core outer surface (COS) that is oppositely positioned from RIS. The first gap is positioned between the COS and RIS. The rotation disk has an end. The drum rotor is connected to the end and the rotation disk is rotatably connected to the shaft. The MR material is disposed within the first gap and the second gap. The housing includes a housing cap secured to the housing wall at a housing top edge of the housing wall. The housing also includes a sensor housing secured to the housing wall at a housing bottom edge of the housing wall.

The upper magnetic seal is positioned to block movement of MR material from the first gap past an upper void between the upper magnetic seal and the housing cap. The lower magnetic seal is positioned to block movement of the MR material from the second gap past lower void between the lower magnetic seal and the core.

The TFD drum brake is controlled by a controller. The controller is in electronic communication with the at least one sensor. A power source generates a current. The power source is in electrical communication with the integrated coil. The controller is capable of controlling the current from the power source and the magnetic flux is generated as a result of the current being communicated to the integrated coil.

A circuit is provided that is capable of saturating the drum rotor with the magnetic flux. The circuit includes the core, the first gap with the MR material disposed therein, the drum rotor, the second gap with the MR material disposed therein, and the pole ring. The drum rotor saturates when the magnetic flux passes through the circuit and when the magnetic flux reaches a threshold of about 1.3 Tesla (T).

The method step of energizing the integrated coil by applying current to the integrated coil, generates the magnetic flux. The method step of magnetically saturating the drum rotor occurs with the generation of the magnetic flux. The step of magnetically saturating the drum rotor causes the first brake shear surface and the second brake shear surface of the drum rotor to shear against the MR material and each of the pole ring shear surface and the core shear surface. The method step of generating the resistive torque, includes the shearing of the MR material against the first brake shear surface, the second brake shear surface, the pole ring shear surface, and the core shear surface to create the resistive torque.

### Brief Description of the Drawings

FIGS. 1a and 1b depict a perspective view of a tactile feedback device (TFD) drum brake.
FIGS. 2a and 2b depict a section view of the TFD drum brake from FIGS. 1a and 1b.
FIG. 3 is a detail view of the upper half of the TFD drum brake from FIGS. 2a and 2b.
FIG. 4 is a detail view of the magnetic seal from FIGS. 2a and 2b.
FIG. 5 is a schematic view of the magnetic flux of the TFD drum brake from FIGS. 2a and 2b.
FIG. 6 is a section view of the TFD drum brake from FIGS. 1a and 1b with a different magnetic seal configuration.
FIG. 7 is a detail view of the magnetic seal from FIG. 6.
FIG. 8 is a schematic view of the magnetic flux of the TFD drum brake from FIG. 6.

### Detailed Description

Vehicles typically have a steering column and a steering wheel to enable steering the vehicle. Many types of vehicles such as cars, trucks, off-road equipment, watercraft, etc. now use steer-by-wire technology and require the use of feedback to the operator to give the sensation of resistance as the steering wheel is turned. As used, the term steering wheel encompasses a standard wheel, or anything that rotates. The feedback is provided by a tactile feedback device (TFD). In the invention disclosed herein, the TFD is a TFD drum brake.

A typical magnetically responsive (MR) disk brake or a typical drum brake do not provide for radial compactness. A TFD drum brake as disclosed herein provides the benefits of a drum brake, but also adds a substantially increased torque provided by the MR material disposed within the TFD drum brake.

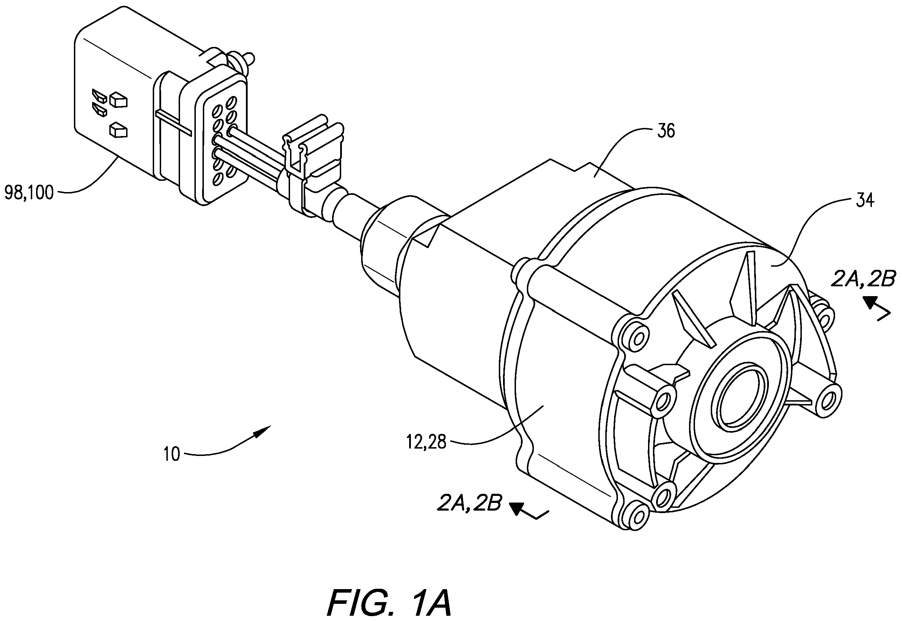

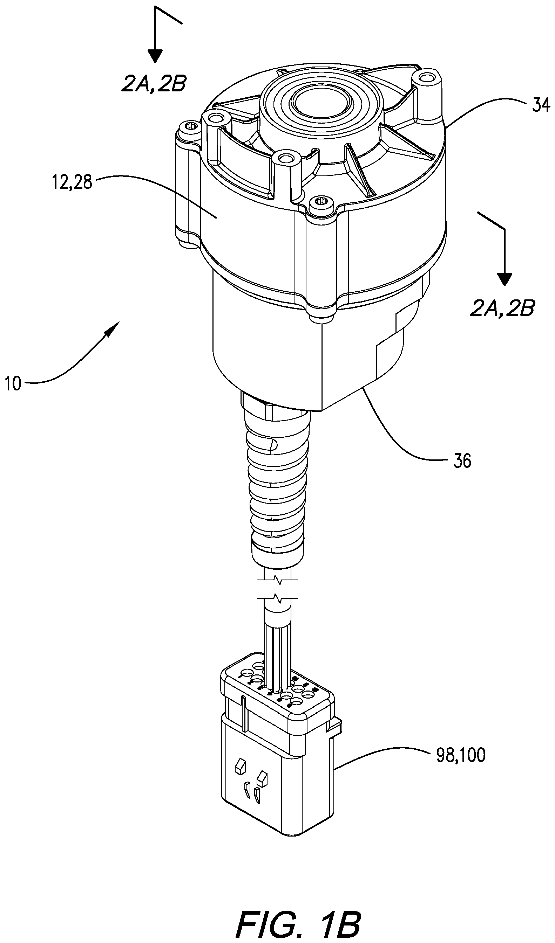

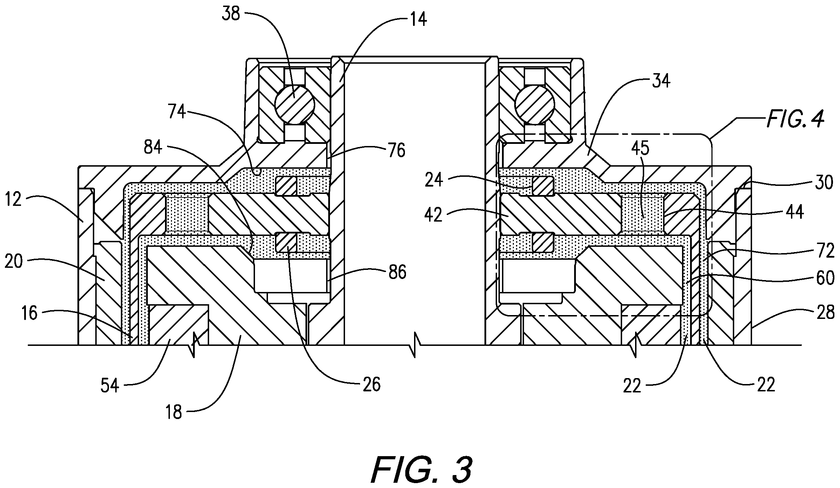

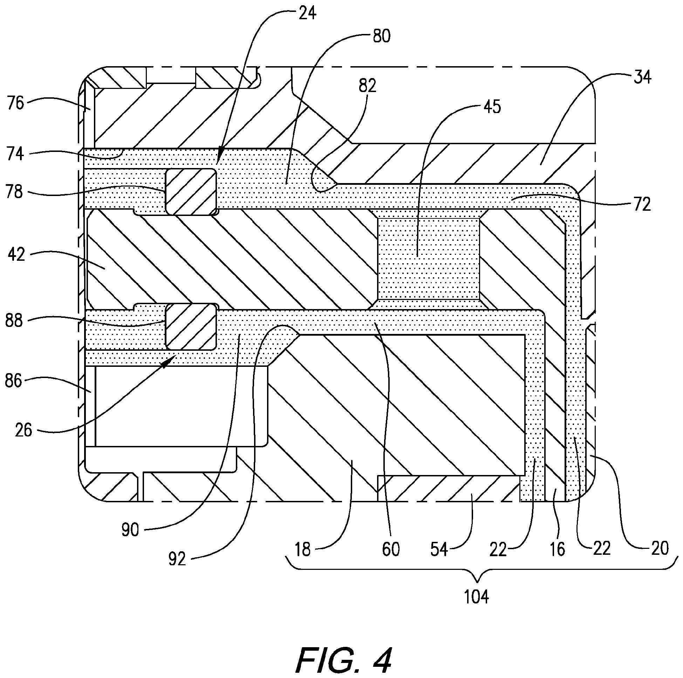

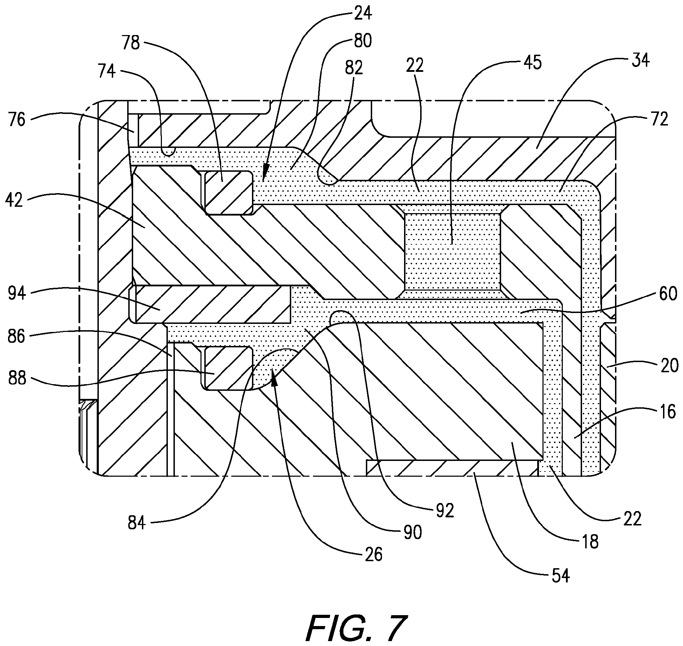

Referring to the drawings, FIGS. 1-8 depict a tactile feedback device (TFD) drum brake generally designated as TFD drum brake 10. TFD drum brake 10 comprises housing 12 enclosing shaft 14, drum rotor 16, core 18, pole ring 20, MR material 22, upper magnetic seal 24, and lower magnetic seal 26 within. Housing 12 includes housing wall 28. Housing wall 28 includes housing top edge 30 and housing bottom edge 32. Housing cap 34 is secured to housing top edge 30. Housing cap 34 is made from a non-magnetic material (e.g., 6061-T6 Aluminum or similar material). Sensor housing 36 encloses drive electronics (not shown) for TFD drum brake 10 and is secured to housing bottom edge 32.

Shaft 14 is rotatably disposed within housing 12. Shaft 14 is rotatably supported by upper bearings 38 and lower bearings 40. Shaft 14 has rotation disk 42 attached thereto and extending radially outward therefrom. Drum rotor 16 is connected to rotation disk 42 at end 44 of rotation disk 42 and rotates with shaft 14. As illustrated in FIGS. 1-3 drum rotor 16 extends radially outward from end 44 and is perpendicular to shaft 14 before it bends parallel to shaft 14 and perpendicular to rotation disk 42. It is understood that rotation disk 42 can extend radially outward and drum rotor 16 can only be parallel to shaft 14. Additionally, drum rotor 16 and rotational disk 42 can be a single component directly affixed to shaft 14. In one embodiment, drum rotor 16 has a thickness between about 0.5 millimeters to about 5 millimeters. In another embodiment, drum rotor 16 has a thickness of about 0.5 millimeters to about 1.5 millimeters.

First brake shear surface 46 is on rotor inner surface (RIS) 48 of drum rotor 16, and second brake shear surface 50 that is on rotor outer surface (ROS) 52 on drum rotor 16. RIS 48 faces radially inward and ROS 52 faces radially outward.

Core 18 is disposed about shaft 14 and is not rotatable relative to shaft 14. Core 18 is positioned radially inward from drum rotor 16. Core 18 includes integrated coil 54. Core 18 has core shear surface 56 on core outer surface (COS) 58 that is radially inward and oppositely positioned from RIS 48. The space between COS 58 and RIS 48 forms first gap 60 therebetween. MR material 22 is disposed within first gap 60.

Pole ring 20 is positioned and secured radially outward from drum rotor 16 and is secured between cap lower edge 62, lower seat 64 of housing wall 28, and wall inner surface 66. Pole ring 20 is fixedly positioned radially outward from drum rotor 16. Pole ring 20 has pole ring shear surface 68 on pole ring inner surface (PRIS) 70. PRIS 70 is radially outward and oppositely positioned from ROS 52. The space between ROS 52 and PRIS 70 forms second gap 72 therebetween. MR material 22 is also disposed within second gap 72. Flow hole 45 is positioned proximate end 44 and is part of rotation disk 42. Flow hole 45 allows for MR material 22 to flow between first gap 60 and second gap 72.

In one embodiment, first gap 60 and second gap 72 each have a width of about 0.5 millimeters to about 2.0 millimeters. In another embodiment, first gap 60 and second gap 72 each have a width of about 0.5 millimeters to about 1.0 millimeters.

Referring to FIGS. 1-4, upper magnetic seal 24 is positioned between second gap 72, rotation disk 42, and lower edge 74 of housing cap 34, where upper void 76 is formed therebetween. Upper magnetic seal 24 is positioned to prevent or block MR material 22 from moving from second gap 72. Upper magnetic seal 24 includes permanent magnet 78. Permanent magnet 78 is affixed to and rotates with rotation disk 42. Upper opening 80 is positioned between upper void edge 82 of second gap 72 and permanent magnet 78. Upper magnetic seal 24 prevents MR material 22 from entering upper void 76 through upper opening 80 and contaminating upper bearings 38.

Lower magnetic seal 26 is positioned between first gap 60, rotation disk 42, and upper edge 84 of core 18, where lower void 86 is formed therebetween. Lower magnetic seal 26 includes second permanent magnet 88. Lower magnetic seal 26 is positioned to prevent or block MR material 22 from moving from first gap 60. Second permanent magnet 88 is affixed to and rotates with rotation disk 42. Lower opening 90 is positioned between lower void edge 92 of first gap 60 and second permanent magnet 88. Lower magnetic seal 26 prevents MR material 22 from entering lower void 86 and contaminating lower bearings 40.

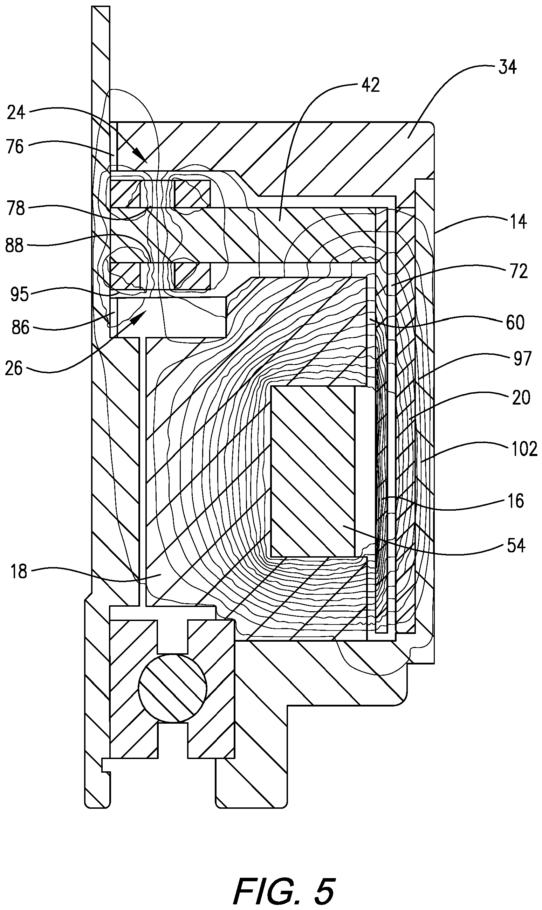

In an alternative embodiment illustrated in FIG. 5-8, lower magnetic seal 26 is positioned affixed adjacent core 18 with second permanent magnet 88 affixed to core 18. Lower void 86 is positioned between non-magnetic washer 94 and lower opening 90. Non-magnetic washer 94 is positioned affixed to and rotates with rotation disk 42.

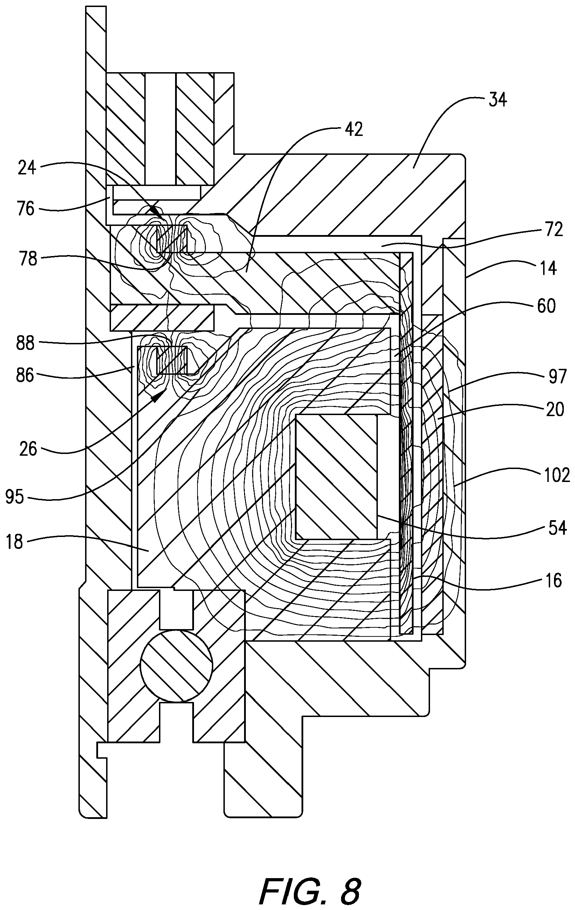

As illustrated in FIGS. 5 and 8, polarity 95 of lower magnetic seal 26 in all embodiments is opposite of polarity 97 of pole ring 20. Rotation disk 42 provides the magnetic flux path for both upper magnetic seal 24 and lower magnetic seal 26.

Referring to FIGS. 1-8, MR material 22 is a dry magnetically responsive powder including magnetizable particles that are not dispersed within a liquid or oil carrier. The magnetizable particles of material may include carbonyl iron, stainless steel, and/or any other magnetic material having various shapes, not limited to a spherical shape. MR material 22 is configured to provide smooth torque that is proportional to current, and it is independent of temperature.

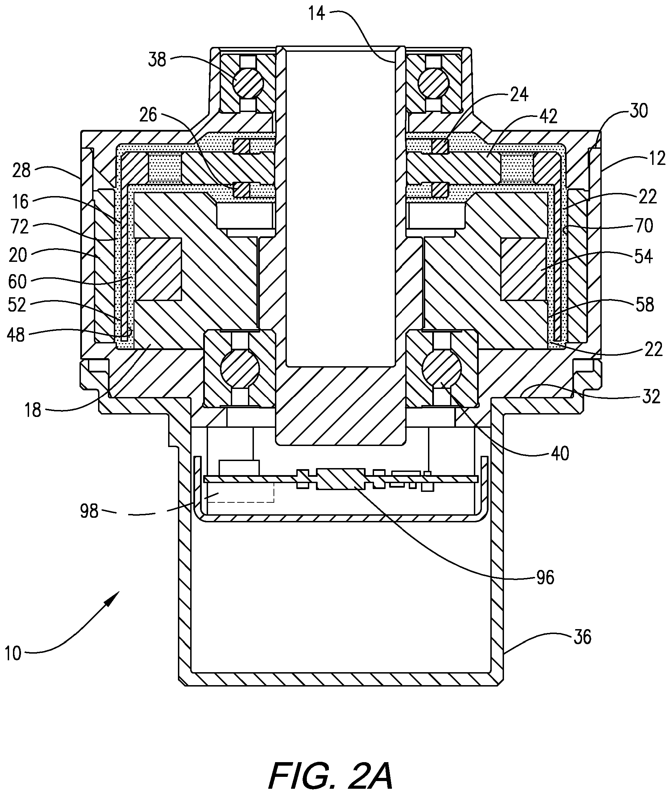

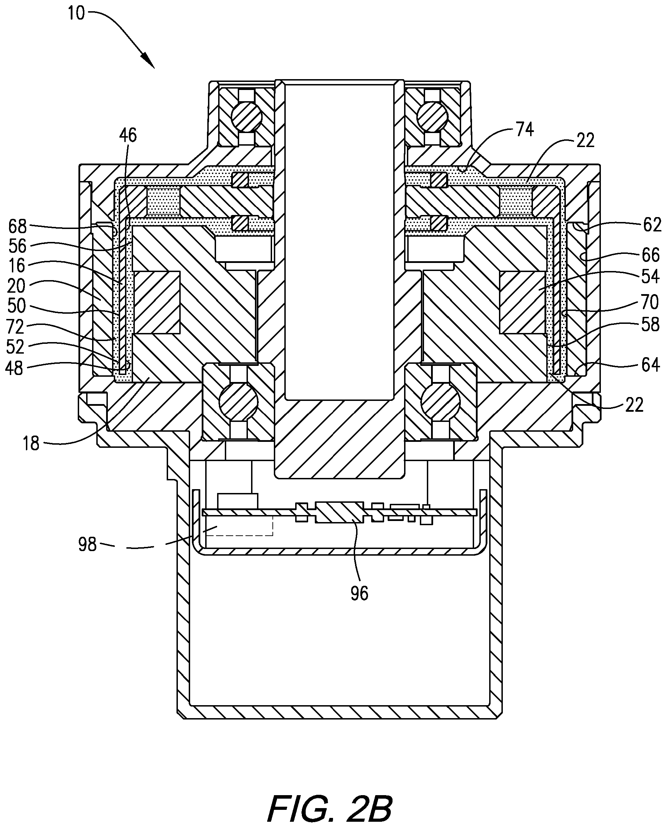

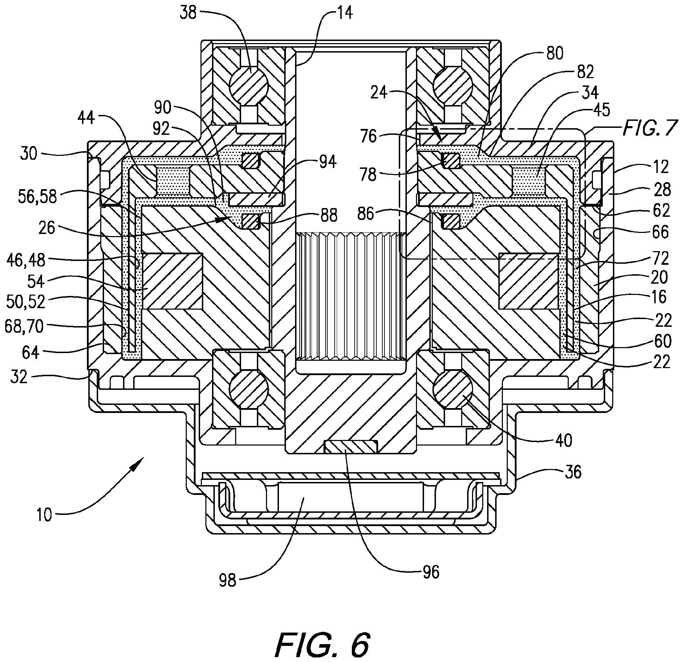

As illustrated in FIGS. 2a, 2b, and 6, at least one sensor 96 is positioned to monitor rotation of shaft 14.

Referring to FIGS. 1a-2b and 6, controller 98 and power source 100 are included with TFD drum brake 10. Power source 100 is capable of generating a current (not shown) and directly or indirectly electrically communicates the current to integrated coil 54. Power source 100 is externally positioned from TFD drum brake 10. Controller 98 is at least in electronic communication with at least one sensor 96, integrated coil 54, and power source 100. Controller may include a current amplifier (not shown) and at least one temperature sensor (not shown).

Controller 98 is capable of controlling the current from power source 100 used to energize integrated coil 54 and generate magnetic flux 102. The control is provided by using algorithms related to end-stop torque to simulate the end of travel or to torque for creating the tactile feedback based upon inputs such as steering effort, vehicle speed, and other operating functions. The control also includes processing data at least from sensor 96 related to the rotation of shaft 14.

Controller 98 increases or decreases the current from power source 100 that is electrically communicated to integrated coil 54. When the current amplifier is included, the current is controlled by the current amplifier, and it is capable of increasing or decreasing the current electrically communicated to integrated coil 54. The current amplifier is used when controller 98 is integrally positioned within sensor housing 36 of TFD drum brake 10. The current amplifier may be used when controller 98 is externally positioned from sensor housing 36 of TFD drum brake 10.

Referring to FIGS. 5 and 8, magnetic flux 102 is generated when integrated coil 54 is energized with the current. Circuit 104 includes core 18, first gap 60 with MR material 22 disposed therein, drum rotor 16, second gap 72 with MR material 22 disposed therein, and pole ring 20. Magnetic flux 102 passes through circuit 104 and saturates drum rotor 16. Stated another way, controller 98 is capable of saturating drum rotor 16 with magnetic flux 102 generated by applying the current to integrated coil 54. Magnetic flux 102 causes the MR material 22 to create shear between the core shear surface 56 and the first brake shear surface 46, and between second brake shear surface 50 and pole ring shear surface 68. The effect of shearing due to is the creation of torque in TFD drum brake 10.

TFD drum brake 10 may be used on a vehicle (not shown). Vehicles typically have a steering column (not shown) and a steering wheel (not shown) to enable steering the vehicle. As discussed above, many vehicles now use steer-by-wire technology and require the use of a feedback to the operator of the vehicle to give the sensation of resistance as the steering wheel is turned. For vehicles with a steering column, TFD drum brake 10 enclosed therein. Shaft 15 of TFD drum brake 10 is capable of transmitting a feedback force to the operator through the steering wheel.

In an embodiment, a method of providing tactile feedback using TFD drum brake 10 is provided. The method comprises generating torque with TFD drum brake 10 described above, energizing integrated coil 54 by applying current to integrated coil 54, magnetically saturating drum rotor 16, and generating a resistive torque.

The drum brake is described above and includes housing 12 which encloses shaft 14, drum rotor 16, pole ring 20, core 18, rotation disk 42, upper magnetic seal 24, lower magnetic seal 26, MR material 22, and at least one sensor 96. Drum rotor 16 has first brake shear surface 46 and second brake shear surface 50. First brake shear surface 46 is on rotor inner surface (RIS) 48 of drum rotor 16 and second brake shear surface 50 is on rotor outer surface (ROS) 52 of drum rotor 16. Pole ring 20 has pole ring shear surface 68 on pole ring inner surface (PRIS) 70 fixedly and oppositely positioned from ROS 52. Second gap 72 is positioned between PRIS 70 and ROS 52. Core 18 has integrated coil 54 and core shear surface 56 on core outer surface (COS) 58 oppositely positioned from RIS 48. First gap 60 is positioned between the COS (58) and RIS 48. Rotation disk 42 has end 44. Drum rotor 16 is connected to end 44 and rotation disk 42 is rotatably connected to shaft 14. MR material 22 is disposed within first gap 60 and second gap 72. Housing 12 includes housing cap 34 secured to housing wall 28 at housing top edge 30 of housing wall 28. Housing 12 also includes sensor housing 36 secured to housing wall 28 at housing bottom edge 32 of housing wall 28.

Upper magnetic seal 24 is positioned to trap MR material in upper void 76 and to block movement of MR material 22 from first gap 60 past upper void 76 between upper magnetic seal 24 and housing cap 34. Lower magnetic seal 26 is positioned to trap MR material in lower void 86 and to block movement of MR material 22 from second gap 72 past lower void 86 between lower magnetic seal 26 and core 18. TFD drum brake 10 also includes at least one sensor 96.

TFD drum brake 10 is controlled by controller 98. Controller 98 is in electronic communication with at least one sensor. Power source 100 generates a current. Power source 100 is in electrical communication with integrated coil 54. Controller 98 is capable of controlling the current from power source 100 and magnetic flux 102 generated as a result of current being communicated to integrated coil 54.

Circuit 104 is capable of saturating drum rotor 16 with magnetic flux 102. Circuit 104 includes core 18, first gap 60 with MR material 22 disposed therein, drum rotor 16, second gap 72 with MR material 22 disposed therein, and pole ring 20. Drum rotor 16 saturates when magnetic flux 102 passes through circuit 104.

The method step of energizing integrated coil 54 by applying current to integrated coil 54, generates magnetic flux 102.

The method step of magnetically saturating drum rotor 16 occurs with the generation of magnetic flux 102. The step of magnetically saturating drum rotor 16 causes first brake shear surface 46 and second brake shear surface 50 of drum rotor 16 to shear against MR material 22 and each of pole ring shear surface 68 and core shear surface 56.

The method step of generating the resistive torque, includes the shearing of the MR material 22 against first brake shear surface 46, second brake shear surface 50, pole ring shear surface 68, and the core shear surface 56 to create the resistive torque.

Other embodiments of the present invention will be apparent to one skilled in the art. As such, the foregoing description merely enables and describes the general uses and methods of the present invention. Accordingly, the following claims define the true scope of the present invention.

## Claims

1. A tactile feedback device, (TFD) drum brake (10) comprising:
a shaft (14) having a rotation disk (42) rotatably connected thereto;
a drum rotor (16) connected to the rotation disk (42);
a core (18) having an integrated coil (54) positioned radially inward from the drum rotor (16) forming a first gap (60) therebetween;
a pole ring (20) fixedly positioned radially outward from the drum rotor (16) forming a second gap (72) therebetween;
a magnetically responsive (MR) material (22) disposed within the first gap (60) and the second gap (72); **characterised by**
an upper magnetic seal (24) positioned to block the MR material (22) moving from the second gap (72);
a lower magnetic seal (26) positioned to block the MR material (22) moving from the first gap (60);
a housing (12) enclosing the shaft (14), the drum rotor (16), the core (18), the upper magnetic seal (24), and the lower magnetic seal (26), the housing (12) having a housing cap (34) and a sensor housing (36) secured thereto; and
at least one sensor (96) capable of detecting a rotation of the shaft (14).

2. The TFD drum brake (10) of claim 1, further comprising a controller (98) and an external power source (100), wherein the controller (98) is in electronic communication with the at least one sensor (96), the integrated coil (54), and the external power source (100), and the external power source (100) is capable of generating a current, wherein the external power source (100) is in electrical communication with the integrated coil (54), wherein the controller (98) is capable of controlling the current from the external power source (100) and a magnetic flux (102) generated by the integrated coil (54).

3. The TFD drum brake (10) of claim 2, further comprising a circuit (104) capable of saturating the drum rotor (16) with the magnetic flux (102), wherein the circuit (104) includes the core (18), the first gap (60) with the MR material (22) disposed therein, the drum rotor (16), the second gap (72) with the MR material (22) disposed therein, and the pole ring (20), wherein the drum rotor (16) saturates when the magnetic flux (102) passes through the circuit (104).

4. The TFD drum brake (10) of claim 2, wherein the controller (98) is integrally positioned within the sensor housing (36) of the TFD drum brake (10).

5. The TFD drum brake (10) of claim 2, wherein the controller (98) includes a current amplifier and is capable of increasing or decreasing the current electrically communicated to the integrated coil (54).

6. The TFD drum brake (10) of claim 2, wherein the controller (98) further includes at least one temperature sensor.

7. The TFD drum brake (10) of claim 1, wherein the upper magnetic seal (24) includes a permanent magnet (78) positioned adjacent an upper opening (80), the upper opening (80) being between the permanent magnet (78) and the housing cap (34), and wherein the lower magnetic seal (26) includes a second permanent magnet (88) positioned adjacent a lower opening (90), the lower opening (90) being between the second permanent magnet (88) and the core (18).

8. The TFD drum brake (10) of claim 1, wherein a polarity (95) of the lower magnetic seal (26) is opposite of a polarity (97) of a magnetic flux (102).

9. The TFD drum brake (10) of claim 1, wherein a controller (98) is capable of saturating the drum rotor (16) with a magnetic flux (102) generated by applying a current to the integrated coil (54).

10. The TFD drum brake (10) of claim 1, further comprising:
a first brake shear surface (46) on the drum rotor (16) and a second brake shear surface (50) on the drum rotor (16), wherein the first brake shear surface (46) is on a rotor inner surface (RIS) (48) of the drum rotor (16) and the second brake shear surface (50) is on a rotor outer surface (ROS) (52) of the drum rotor (16);
a pole ring shear surface (68) on a pole ring inner surface (PRIS) (70) of the pole ring (20), the PRIS (70) oppositely positioned from the ROS (52), wherein the first gap (60) is positioned between the PRIS (70) and the ROS (52); and
a core shear surface (56) on a core outer surface (COS) (58) of the core (18), the COS (58) oppositely positioned from the RIS (48), wherein the second gap (72) is positioned between the COS (58) and the RIS (48).

11. The TFD drum brake (10) of claim 1, wherein the first gap (60) and the second gap (72) each have a width of about 0.5 millimeters to about 2.0 millimeters.

12. The TFD drum brake (10) of claim 1, further compromising a steering column with the TFD drum brake (10) enclosed therein.

13. The TFD drum brake (10) of claim 1 or claim 10, wherein the housing (12) encloses the pole ring (20) and the rotation disk (42) and the MR material (22), and wherein the housing cap (34) is secured to a housing wall (28) at a housing top edge (30) of the housing wall (28) and the sensor housing (36) is secured to the housing wall (28) at a housing bottom edge (32) of the housing wall (28).

14. The TFD drum brake (10) of any one of claims 1, 10 or 13, wherein the upper magnetic seal (24) is positioned to trap MR material in an upper void (76) and to block movement of the MR material (22) from the first gap (60) past the upper void (76) between the upper magnetic seal (24) and the housing cap (34), and the lower magnetic seal (26) is positioned to trap MR material in a lower void (86) and to block movement of the MR material (22) from the second gap (72) past the lower void (86) between lower magnetic seal (26) and the core (18).

15. A method of providing tactile feedback using a tactile feedback device (TFD) drum brake (10), the method comprising:
generating a torque with the TFD drum brake (10), the TFD drum brake including:
a drum rotor (16) having a first brake shear surface (46) and a second brake shear surface (50), wherein the first brake shear surface (46) is on a rotor inner surface (RIS) (48) of the drum rotor (16) and the second brake shear surface (50) is on a rotor outer surface (ROS) (52) of the drum rotor (16);
a pole ring (20) having a pole ring shear surface (68) on a pole ring inner surface (PRIS) (70) fixedly and oppositely positioned from the ROS (52), wherein a second gap (72) is positioned between the PRIS (70) and the ROS (52);
a core (18) having an integrated coil (54), the core (18) having a core shear surface (56) on a core outer surface (COS) (58) oppositely positioned from the RIS (48), wherein a first gap (60) is positioned between the COS (58) and the RIS (48);
a rotation disk (42) having an end (44), wherein the drum rotor (16) is connected to the end (44) and the rotation disk (42) is rotatably connected to a shaft (14);
an upper magnetic seal (24);
a lower magnetic seal (26);
a magnetically responsive (MR) material (22) disposed within the first gap (60) and the second gap (72);
a housing (12) enclosing the shaft (14), the drum rotor (16), the pole ring (20), the core (18), the rotation disk (42), the upper magnetic seal (24), and the lower magnetic seal (26), the housing (12) including a housing cap (34) secured to a housing wall (28) at a housing top edge (30) of the housing wall (28), and a sensor housing (36) secured to the housing wall (28) at a housing bottom edge (32) of the housing wall (28);
wherein the upper magnetic seal (24) is positioned to block movement of the MR material (22) from the first gap (60) past an upper void (76) between the upper magnetic seal (24) and the housing cap (34), and the lower magnetic seal (26) is positioned to block movement of the MR material (22) from the second gap (72) past a lower void (86) between lower magnetic seal (26) and the core (18);
at least one sensor (96);
a controller (98) in electronic communication with the at least one sensor (96);
a power source (100) generating a current, the power source (100) in electrical communication with the integrated coil (54), wherein the controller (98) is capable of controlling the current from the power source (100) and a magnetic flux (102) generated as a result of the current being communicated to the integrated coil 54;
a circuit (104) capable of saturating the drum rotor (16) with the magnetic flux (102), wherein the circuit (104) includes the core (18), the first gap (60) with the MR material (22) disposed therein, the drum rotor (16), the second gap (72) with the MR material (22) disposed therein, and the pole ring (20), wherein the drum rotor (16) saturates when the magnetic flux (102) passes through the circuit (104);
energizing the integrated coil (54) by applying the current to the integrated coil (54), the energizing generating the magnetic flux (102);
magnetically saturating the drum rotor (16) with the magnetic flux (102), wherein the magnetically saturating causes the first brake shear surface (46) and the second brake shear surface (50) of the drum rotor (16) to shear against the MR material (22) and each of the pole ring shear surface (68), and the core shear surface (56); and
generating a resistive torque, where in the shearing of the MR material (22) against first brake shear surface (46), the second brake shear surface (50), the pole ring shear surface (68), and the core shear surface (56) creates the resistive torque.

## Patentansprüche

1. Eine Trommelbremse (10) mit taktiler Rückmeldungsvorrichtung (TFD), die Folgendes beinhaltet:
eine Welle (14), die eine damit drehbar verbundene Drehscheibe (42) aufweist;
einen Trommelrotor (16), der mit der Drehscheibe (42) verbunden ist;
einen Kern (18) mit einer integrierten Spule (54), die radial nach innen von dem Trommelrotor (16) positioniert ist und einen ersten Spalt (60) dazwischen ausbildet;
einen Polring (20), der radial nach außen von dem Trommelrotor (16) fixiert positioniert ist und einen zweiten Spalt (72) dazwischen ausbildet;
ein magnetisch reagierendes (MR) Material (22), das in dem ersten Spalt (60) und dem zweiten Spalt (72) angeordnet ist; **gekennzeichnet durch**
eine obere magnetische Dichtung (24), die positioniert ist, um die Bewegung des MR-Materials (22) aus dem zweiten Spalt (72) zu blockieren;
eine untere magnetische Dichtung (26), die positioniert ist, um die Bewegung des MR-Materials (22) aus dem ersten Spalt (60) zu blockieren;
ein Gehäuse (12), das die Welle (14), den Trommelrotor (16), den Kern (18), die obere magnetische Dichtung (24) und die untere magnetische Dichtung (26) umschließt,
wobei das Gehäuse (12) eine Gehäusekappe (34) und ein daran befestigtes Sensorgehäuse (36) aufweist; und
wenigstens einen Sensor (96), der in der Lage ist, eine Drehung der Welle (14) zu erkennen.

2. TFD-Trommelbremse (10) gemäß Anspruch 1, die ferner eine Steuervorrichtung (98) und eine externe Leistungsquelle (100) beinhaltet, wobei die Steuervorrichtung (98) in elektronischer Kommunikation mit dem wenigstens einen Sensor (96), der integrierten Spule (54) und der extemen Leistungsquelle (100) steht und die externe Leistungsquelle (100) in der Lage ist, einen Strom zu erzeugen, wobei die externe Leistungsquelle (100) in elektrischer Kommunikation mit der integrierten Spule (54) steht, wobei die Steuervorrichtung (98) in der Lage ist, den Strom von der externen Leistungsquelle (100) und einen von der integrierten Spule (54) erzeugten magnetischen Fluss (102) zu steuern.

3. TFD-Trommelbremse (10) gemäß Anspruch 2, die ferner eine Schaltung (104) beinhaltet, die in der Lage ist, den Trommelrotor (16) mit dem magnetischen Fluss (102) zu sättigen, wobei die Schaltung (104) den Kern (18), den ersten Spalt (60) mit dem darin angeordneten MR-Material (22), den Trommelrotor (16), den zweiten Spalt (72) mit dem darin angeordneten MR-Material (22) und den Polring (20) umfasst, wobei der Trommelrotor (16) gesättigt wird, wenn der magnetische Fluss (102) durch die Schaltung (104) fließt.

4. TFD-Trommelbremse (10) gemäß Anspruch 2, wobei die Steuervorrichtung (98) innerhalb des Sensorgehäuses (36) der TFD-Trommelbremse (10) integralpositioniert ist.

5. TFD-Trommelbremse (10) gemäß Anspruch 2, wobei die Steuervorrichtung (98) einen Stromverstärker umfasst und in der Lage ist, den elektrisch an die integrierte Spule (54) kommunizierten Strom zu erhöhen oder zu verringern.

6. TFD-Trommelbremse (10) gemäß Anspruch 2, wobei die Steuervorrichtung (98) ferner wenigstens einen Temperatursensor umfasst.

7. TFD-Trommelbremse (10) gemäß Anspruch 1, wobei die obere magnetische Dichtung (24) einen Permanentmagneten (78) umfasst, der neben einer oberen Öffnung (80) positioniert ist, wobei die obere Öffnung (80) zwischen dem Permanentmagneten (78) und der Gehäusekappe (34) liegt, und wobei die untere magnetische Dichtung (26) einen zweiten Permanentmagneten (88) umfasst, der neben einer unteren Öffnung (90) positioniert ist, wobei die untere Öffnung (90) zwischen dem zweiten Permanentmagneten (88) und dem Kern (18) liegt.

8. TFD-Trommelbremse (10) gemäß Anspruch 1, wobei eine Polarität (95) der unteren magnetischen Dichtung (26) einer Polarität (97) eines magnetischen Flusses (102) entgegengesetzt ist.

9. TFD-Trommelbremse (10) gemäß Anspruch 1, wobei eine Steuervorrichtung (98) in der Lage ist, den Trommelrotor (16) mit einem magnetischen Fluss (102) zu sättigen, der durch Anlegen eines Stroms an die integrierte Spule (54) erzeugt wird.

10. TFD-Trommelbremse (10) gemäß Anspruch 1, die ferner Folgendes beinhaltet:
eine erste Bremsscheroberfläche (46) auf dem Trommelrotor (16) und eine zweite Bremsscheroberfläche (50) auf dem Trommelrotor (16), wobei sich die erste Bremsscheroberfläche (46) auf einer Rotorinnenoberfläche (RIS) (48) des Trommelrotors (16) befindet und sich die zweite Bremsscheroberfläche (50) auf einer Rotoraußenoberfläche (ROS) (52) des Trommelrotors (16) befindet;
eine Polringscheroberfläche (68) auf einer Polringinnenoberfläche (PRIS) (70) des Polrings (20), wobei die PRIS (70) gegenüber der ROS (52) positioniert ist, wobei der erste Spalt (60) zwischen der PRIS (70) und der ROS (52) positioniert ist; und
eine Kernscheroberfläche (56) auf einer Kernaußenoberfläche (COS) (58) des Kerns (18), wobei die COS (58) gegenüber der RIS (48) positioniert ist, wobei der zweite Spalt (72) zwischen der COS (58) und der RIS (48) positioniert ist.

11. TFD-Trommelbremse (10) gemäß Anspruch 1, wobei der erste Spalt (60) und der zweite Spalt (72) jeweils eine Breite von etwa 0,5 Millimetern bis etwa 2,0 Millimetern aufweisen.

12. TFD-Trommelbremse (10) gemäß Anspruch 1, die ferner eine Lenksäule mit der darin umschlossenen TFD-Trommelbremse (10) beinhaltet.

13. TFD-Trommelbremse (10) gemäß Anspruch 1 oder Anspruch 10, wobei das Gehäuse (12) den Polring (20) und die Drehscheibe (42) und das MR-Material (22) umschließt und wobei die Gehäusekappe (34) an einer Gehäusewand (28) an einer Gehäuseoberkante (30) der Gehäusewand (28) befestigt ist und das Sensorgehäuse (36) an der Gehäusewand (28) an einer Gehäuseunterkante (32) der Gehäusewand (28) befestigt ist.

14. TFD-Trommelbremse (10) gemäß einem der Ansprüche 1, 10 oder 13, wobei die obere magnetische Dichtung (24) positioniert ist, um MR-Material in einem oberen Hohlraum (76) einzufangen und die Bewegung des MR-Materials (22) aus dem ersten Spalt (60) zwischen der oberen magnetischen Dichtung (24) und der Gehäusekappe (34) an dem oberen Hohlraum (76) vorbei zu blockieren, und die untere magnetische Dichtung (26) positioniert ist, um MR-Material in einem unteren Hohlraum (86) einzufangen und die Bewegung des MR-Materials (22) von dem zweiten Spalt (72) zwischen der unteren magnetischen Dichtung (26) und dem Kern (18) an dem unteren Hohlraum (86) vorbei zu blockieren.

15. Ein Verfahren zum Bereitstellen einer taktilen Rückmeldung unter Verwendung einer Trommelbremse (10) mit taktiler Rückmeldungsvorrichtung (TFD), wobei das Verfahren Folgendes beinhaltet:
Erzeugen eines Drehmoments mit der TFD-Trommelbremse (10), wobei die TFD-Trommelbremse Folgendes umfasst:
einen Trommelrotor (16) mit einer ersten Bremsscheroberfläche (46) und einer zweiten Bremsscheroberfläche (50), wobei sich die erste Bremsscheroberfläche (46) auf einer Rotorinnenoberfläche (RIS) (48) des Trommelrotors (16) befindet und sich die zweite Bremsscheroberfläche (50) auf einer Rotoraußenoberfläche (ROS) (52) des Trommelrotors (16) befindet;
einen Polring (20) mit einer Polringscheroberfläche (68) auf einer Polringinnenoberfläche (PRIS) (70), die fixiert und gegenüber der ROS (52) positioniert ist, wobei ein zweiter Spalt (72) zwischen der PRIS (70) und der ROS (52) positioniert ist;
einen Kern (18) mit einer integrierten Spule (54), wobei der Kern (18) eine Kernscheroberfläche (56) auf einer Kernaußenoberfläche (COS) (58) aufweist, die gegenüber der RIS (48) positioniert ist, wobei ein erster Spalt (60) zwischen der COS (58) und der RIS (48) positioniert ist;
eine Drehscheibe (42) mit einem Ende (44), wobei der Trommelrotor (16) mit dem Ende (44) verbunden ist und die Drehscheibe (42) drehbar mit einer Welle (14) verbunden ist;
eine obere magnetische Dichtung (24);
eine untere magnetische Dichtung (26);
ein magnetisch reagierendes (MR) Material (22), das in dem ersten Spalt (60) und dem zweiten Spalt (72) angeordnet ist;
ein Gehäuse (12), das die Welle (14), den Trommelrotor (16), den Polring (20), den Kern (18), die Drehscheibe (42), die obere magnetische Dichtung (24) und die untere magnetische Dichtung (26) umschließt, wobei das Gehäuse (12) eine Gehäusekappe (34), die an einer Gehäusewand (28) an einer Gehäuseoberkante (30) der Gehäusewand (28) befestigt ist, und ein Sensorgehäuse (36), das an der Gehäusewand (28) an einer Gehäuseunterkante (32) der Gehäusewand (28) befestigt ist, beinhaltet;
wobei die obere magnetische Dichtung (24) positioniert ist, um die Bewegung des MR-Materials (22) von dem ersten Spalt (60) zwischen der oberen magnetischen Dichtung (24) und der Gehäusekappe (34) an einem oberen Hohlraum (76) vorbei zu blockieren, und die untere magnetische Dichtung (26) positioniert ist, um die Bewegung des MR-Materials (22) von dem zweiten Spalt (72) zwischen der unteren magnetischen Dichtung (26) und dem Kern (18) an einem unteren Hohlraum (86) vorbei zu blockieren;
wenigstens einen Sensor (96);
eine Steuervorrichtung (98), die in elektronischer Kommunikation mit dem wenigstens einen Sensor (96) steht;
eine Leistungsquelle (100), die einen Strom erzeugt, wobei die Leistungsquelle (100) in elektrischer Kommunikation mit der integrierten Spule (54) steht, wobei die Steuervorrichtung (98) in der Lage ist, den Strom von der Leistungsquelle (100) und einen magnetischen Fluss (102) zu steuern, der als Ergebnis davon erzeugt wird, dass der Strom an die integrierte Spule 54 kommuniziert wird;
eine Schaltung (104), die in der Lage ist, den Trommelrotor (16) mit dem magnetischen Fluss (102) zu sättigen, wobei die Schaltung (104) den Kern (18), den ersten Spalt (60) mit dem darin angeordneten MR-Material (22), den Trommelrotor (16), den zweiten Spalt (72) mit dem darin angeordneten MR-Material (22) und den Polring (20) umfasst, wobei der Trommelrotor (16) gesättigt wird, wenn der magnetische Fluss (102) durch die Schaltung (104) fließt;
Erregen der integrierten Spule (54) durch Anlegen des Stroms an die integrierte Spule (54), wobei das Erregen den magnetischen Fluss (102) erzeugt;
magnetisches Sättigen des Trommelrotors (16) mit dem magnetischen Fluss (102), wobei das magnetische Sättigen bewirkt, dass die erste Bremsscheroberfläche (46) und die zweite Bremsscheroberfläche (50) des Trommelrotors (16) gegen das MR-Material (22) und jeweils die Polringscheroberfläche (68) und die Kernscheroberfläche (56) scheren; und
Erzeugen eines Widerstandsmoments, wobei das Scheren des MR-Materials (22) gegen die erste Bremsscheroberfläche (46), die zweite Bremsscheroberfläche (50), die Polringscheroberfläche (68) und die Kernscheroberfläche (56) das Widerstandsmoment bildet.

## Revendications

1. Un frein à tambour de dispositif de retour tactile, (TFD) (10) comprenant :
un arbre (14) ayant un disque de rotation (42) connecté à celui-ci de manière à être capable de tourner ;
un rotor à tambour (16) connecté au disque de rotation (42) ;
un noyau (18) ayant une bobine intégrée (54) positionnée radialement vers l'intérieur du rotor à tambour (16) en formant un premier espace (60) entre eux ;
un anneau de pôle (20) positionné de façon fixe radialement vers l'extérieur du rotor à tambour (16) en formant un deuxième espace (72) entre eux ;
un matériau magnétiquement sensible (MR) (22) situé au sein du premier espace (60) et du deuxième espace (72) ; **caractérisé par**
un joint magnétique supérieur (24) positionné pour bloquer le fait que le matériau MR (22) se déplace depuis le deuxième espace (72) ;
un joint magnétique inférieur (26) positionné pour bloquer le fait que le matériau MR (22) se déplace depuis le premier espace (60) ;
un boîtier (12) renfermant l'arbre (14), le rotor à tambour (16), le noyau (18), le joint magnétique supérieur (24), et le joint magnétique inférieur (26), le boîtier (12) ayant un couvercle de boîtier (34) et un boîtier de capteur (36) fixés à celui-ci ; et
au moins un capteur (96) capable de détecter une rotation de l'arbre (14).

2. Le frein à tambour de TFD (10) de la revendication 1, comprenant en outre un organe de commande (98) et une source d'alimentation externe (100), où l'organe de commande (98) est en communication électronique avec l'au moins un capteur (96), la bobine intégrée (54), et la source d'alimentation externe (100), et la source d'alimentation externe (100) est capable de générer un courant, où la source d'alimentation externe (100) est en communication électrique avec la bobine intégrée (54), où l'organe de commande (98) est capable de commander le courant provenant de la source d'alimentation externe (100) et un flux magnétique (102) généré par la bobine intégrée (54).

3. Le frein à tambour de TFD (10) de la revendication 2, comprenant en outre un circuit (104) capable de saturer le rotor à tambour (16) avec le flux magnétique (102), où le circuit (104) inclut le noyau (18), le premier espace (60) avec le matériau MR (22) situé dans celui-ci, le rotor à tambour (16), le deuxième espace (72) avec le matériau MR (22) situé dans celui-ci, et l'anneau de pôle (20), où le rotor à tambour (16) sature lorsque le flux magnétique (102) passe dans le circuit (104).

4. Le frein à tambour de TFD (10) de la revendication 2, où l'organe de commande (98) est positionné intégralement au sein du boîtier de capteur (36) du frein à tambour de TFD (10).

5. Le frein à tambour de TFD (10) de la revendication 2, où l'organe de commande (98) inclut un amplificateur de courant et est capable d'augmenter ou de diminuer le courant communiqué électriquement à la bobine intégrée (54).

6. Le frein à tambour de TFD (10) de la revendication 2, où l'organe de commande (98) inclut en outre au moins un capteur de température.

7. Le frein à tambour de TFD (10) de la revendication 1, où le joint magnétique supérieur (24) inclut un aimant permanent (78) positionné adjacent à une ouverture supérieure (80), l'ouverture supérieure (80) étant entre l'aimant permanent (78) et le couvercle de boîtier (34), et où le joint magnétique inférieur (26) inclut un deuxième aimant permanent (88) positionné adjacent à une ouverture inférieure (90), l'ouverture inférieure (90) étant entre le deuxième aimant permanent (88) et le noyau (18).

8. Le frein à tambour de TFD (10) de la revendication 1, où une polarité (95) du joint magnétique inférieur (26) est opposée à une polarité (97) d'un flux magnétique (102).

9. Le frein à tambour de TFD (10) de la revendication 1, où un organe de commande (98) est capable de saturer le rotor à tambour (16) avec un flux magnétique (102) généré par application d'un courant à la bobine intégrée (54).

10. Le frein à tambour de TFD (10) de la revendication 1, comprenant en outre :
une première surface de cisaillement de frein (46) sur le rotor à tambour (16) et une deuxième surface de cisaillement de frein (50) sur le rotor à tambour (16), où la première surface de cisaillement de frein (46) est sur une surface interne de rotor (RIS) (48) du rotor à tambour (16) et la deuxième surface de cisaillement de frein (50) est sur une surface externe de rotor (ROS) (52) du rotor à tambour (16) ;
une surface de cisaillement d'anneau de pôle (68) sur une surface interne d'anneau de pôle (PRIS) (70) de l'anneau de pôle (20), la PRIS (70) étant positionnée en opposition par rapport à la ROS (52), où le premier espace (60) est positionné entre la PRIS (70) et la ROS (52) ; et
une surface de cisaillement de noyau (56) sur une surface externe de noyau (COS) (58) du noyau (18), la COS (58) étant positionnée en opposition par rapport à la RIS (48), où le deuxième espace (72) est positionné entre la COS (58) et la RIS (48).

11. Le frein à tambour de TFD (10) de la revendication 1, où le premier espace (60) et le deuxième espace (72) ont chacun une largeur d'environ 0,5 millimètre à environ 2,0 millimètres.

12. Le frein à tambour de TFD (10) de la revendication 1, comprenant en outre une colonne de direction avec le frein à tambour de TFD (10) renfermé dans celle-ci.

13. Le frein à tambour de TFD (10) de la revendication 1 ou de la revendication 10, où le boîtier (12) renferme l'anneau de pôle (20) et le disque de rotation (42) et le matériau MR (22), et où le couvercle de boîtier (34) est fixé à une paroi de boîtier (28) au niveau d'un bord de dessus de boîtier (30) de la paroi de boîtier (28) et le boîtier de capteur (36) est fixé à la paroi de boîtier (28) au niveau d'un bord de dessous de boîtier (32) de la paroi de boîtier (28).

14. Le frein à tambour de TFD (10) de n'importe laquelle des revendications 1, 10 ou 13, où le joint magnétique supérieur (24) est positionné pour enfermer du matériau MR dans un vide supérieur (76) et pour bloquer le déplacement du matériau MR (22) depuis le premier espace (60) au-delà du vide supérieur (76) entre le joint magnétique supérieur (24) et le couvercle de boîtier (34), et le joint magnétique inférieur (26) est positionné pour enfermer le matériau MR dans un vide inférieur (86) et pour bloquer le déplacement du matériau MR (22) depuis le deuxième espace (72) au-delà du vide inférieur (86) entre le joint magnétique inférieur (26) et le noyau (18).

15. Un procédé de fourniture de retour tactile au moyen d'un frein à tambour de dispositif de retour tactile (TFD) (10), le procédé comprenant :
la génération d'un couple avec le frein à tambour de TFD (10), le frein à tambour de TFD incluant :
un rotor à tambour (16) ayant une première surface de cisaillement de frein (46) et une deuxième surface de cisaillement de frein (50), où la première surface de cisaillement de frein (46) est sur une surface interne de rotor (RIS) (48) du rotor à tambour (16) et la deuxième surface de cisaillement de frein (50) est sur une surface externe de rotor (ROS) (52) du rotor à tambour (16) ;
un anneau de pôle (20) ayant une surface de cisaillement d'anneau de pôle (68) sur une surface inteme d'anneau de pôle (PRIS) (70) positionnée de façon fixe et en opposition par rapport à la ROS (52), où un deuxième espace (72) est positionné entre la PRIS (70) et la ROS (52) ;
un noyau (18) ayant une bobine intégrée (54), le noyau (18) ayant une surface de cisaillement de noyau (56) sur une surface externe de noyau (COS) (58) positionnée en opposition par rapport à la RIS (48), où un premier espace (60) est positionné entre la COS (58) et la RIS (48) ;
un disque de rotation (42) ayant une extrémité (44), où le rotor à tambour (16) est connecté à l'extrémité (44) et le disque de rotation (42) est connecté à un arbre (14) de manière à être captable de tourner ;
un joint magnétique supérieur (24) ;
un joint magnétique inférieur (26) ;
un matériau magnétiquement sensible (MR) (22) situé au sein du premier espace (60) et du deuxième espace (72) ;
un boîtier (12) renfermant l'arbre (14), le rotor à tambour (16), l'anneau de pôle (20), le noyau (18), le disque de rotation (42), le joint magnétique supérieur (24), et le joint magnétique inférieur (26), le boîtier (12) incluant un couvercle de boîtier (34) fixé à une paroi de boîtier (28) au niveau d'un bord de dessus de boîtier (30) de la paroi de boîtier (28), et un boîtier de capteur (36) fixé à la paroi de boîtier (28) au niveau d'un bord de dessous de boîtier (32) de la paroi de boîtier (28) ;
où le joint magnétique supérieur (24) est positionné pour bloquer le déplacement du matériau MR (22) depuis le premier espace (60) au-delà d'un vide supérieur (76) entre le joint magnétique supérieur (24) et le couvercle de boîtier (34), et le joint magnétique inférieur (26) est positionné pour bloquer le déplacement du matériau MR (22) depuis le deuxième espace (72) au-delà d'un vide inférieur (86) entre le joint magnétique inférieur (26) et le noyau (18) ;
au moins un capteur (96) ;
un organe de commande (98) en communication électronique avec l'au moins un capteur (96) ;
une source d'alimentation (100) générant un courant, la source d'alimentation (100) étant en communication électrique avec la bobine intégrée (54), où l'organe de commande (98) est capable de commander le courant provenant de la source d'alimentation (100) et un flux magnétique (102) généré en résultat du fait que le courant est communiqué à la bobine intégrée (54) ;
un circuit (104) capable de saturer le rotor à tambour (16) avec le flux magnétique (102), où le circuit (104) inclut le noyau (18), le premier espace (60) avec le matériau MR (22) situé dans celui-ci, le rotor à tambour (16), le deuxième espace (72) avec le matériau MR (22) situé dans celui-ci, et l'anneau de pôle (20), où le rotor à tambour (16) sature lorsque le flux magnétique (102) passe dans le circuit (104) ;
l'excitation de la bobine intégrée (54) par application du courant à la bobine intégrée (54), l'excitation générant le flux magnétique (102) ;
la saturation magnétique du rotor à tambour (16) avec le flux magnétique (102), où la saturation magnétique amène la première surface de cisaillement de frein (46) et la deuxième surface de cisaillement de frein (50) du rotor à tambour (16) à travailler en cisaillement contre le matériau MR (22) et chacune de la surface de cisaillement d'anneau de pôle (68), et de la surface de cisaillement de noyau (56) ; et
la génération d'un couple résistant, où le cisaillement du matériau MR (22) contre la première surface de cisaillement de frein (46), la deuxième surface de cisaillement de frein (50), la surface de cisaillement d'anneau de pôle (68), et la surface de cisaillement de noyau (56) crée le couple résistant.
